# EUROPEAN PATENT SPECIFICATION

(11) **EP 3 643 514 B1**
(45) Date of publication and mention of the grant of the patent: **17.01.2024**
(21) Application number: 18820424.2
(22) Date of filing: 14.06.2018
(51) Int. Cl.: B60C 19/00, B60C 9/00

(54) **PNEUMATIC TIRE WITH NOISE-SUPPRESSING MEMBER, TIRE/RIM ASSEMBLY, AND NOISE-SUPPRESSING MEMBER**
LUFTREIFEN MIT GERÄUSCHUNTERDRÜCKENDEM ELEMENT, REIFEN-/FELGENANORDNUNG UND RAUSCHUNTERDRÜCKENDES ELEMENT
PNEUMATIQUE COMPRENANT UN ÉLÉMENT DE SUPPRESSION DE BRUIT, ENSEMBLE PNEU/JANTE, ET ÉLÉMENT DE SUPPRESSION DE BRUIT

(30) Priority: 19.06.2017 JP 2017119691
(43) Date of publication of application: 29.04.2020
(73) Proprietor: Bridgestone Corporation, Tokyo 104-8340 (JP)
(72) Inventor: HASEGAWA, Keiichi, Tokyo 104-8340 (JP); MATSUMOTO, Yoshifumi, Tokyo 104-8340 (JP); KOUNO, Yoshihide, Tokyo 104-8340 (JP)
(74) Representative: Marks & Clerk LLP
(86) International application number: PCT/JP2018/022801
(87) International publication number: WO 2018/235724

(56) References cited:
- EP-A1- 3 616 942
- EP-A2- 0 833 162
- JP-A- H05 294 102
- JP-A- H06 106 903
- JP-A- S63 291 709
- JP-A- 2003 048 407
- JP-A- 2005 297 858
- JP-A- 2007 062 541
- JP-A- 2010 188 779
- JP-A- 2010 188 779
- JP-A- 2011 093 462
- JP-A- 2011 093 462
- JP-A- 2011 255 684
- JP-A- 2011 255 684
- JP-A- 2014 141 109
- JP-A- 2016 094 163
- KR-A- 20060 054 654
- US-A1- 2013 243 212

## Description

### Technical Field

The present invention relates to a pneumatic tire with a noise suppressing member, a tire/rim assembly, and a noise suppressing member.

### Background Art

A structure is disclosed in which a noise absorbing member that is formed from a sponge is disposed at a tire inner surface, and cavity resonance of a pneumatic tire is suppressed (refer to Japanese Patent Application Laid-Open (JP-A) No. 2011-093462).
Attention is also drawn to the disclosures ofJP2011 255684, JP2011 093462, JP2010 188779, JP H06 106 903 and EP3616942.

### SUMMARY OF INVENTION

### Technical Problem

However, there are cases in which the application of a sponge to a pneumatic tire is difficult due to cost limitations.

An object of the present invention is to lower costs while suppressing cavity resonance of a pneumatic tire.

### Solution to Problem

A noise suppressing member relating to a first aspect is as claimed in claim 1.

A pneumatic tire with a noise suppressing member relating to a second aspect is as claimed in claim 2.

A tire/rim assembly according to a third aspect of the invention is as claimed in claim 3.

### Advantageous Effects of Invention

In accordance with the pneumatic tire with a noise suppressing member, the tire/rim assembly, and the noise suppressing member relating to the present invention, the excellent effect is obtained that cavity resonance of a pneumatic tire can be suppressed at a lower cost than with a sponge.

### BRIEF DESCRIPTION OF DRAWINGS

Fig. 1A is a cross-sectional view showing a state in which a tire/rim assembly relating to an embodiment of the present invention is cut in a tire axial direction.
Fig. 1B is a cross-sectional view in which a portion of a tread is enlarged.
Fig. 2 is a perspective view showing a noise suppressing member.
Fig. 3A is a side view that schematically shows an example in which the noise suppressing member is disposed over the entire tire circumferential direction, at the tire/rim assembly relating to the present invention.
Fig. 3B is a side view that schematically shows an example in which the noise suppressing member is disposed discretely in the tire circumferential direction, at the tire/rim assembly relating to the present invention.
Fig. 4A is a perspective view showing a magnet mounting portion.
Fig. 4B is a perspective view in which the magnet mounting portion shown in Fig. 4A is in a cross-section.
Fig. 5 is a perspective view showing a noise suppressing member relating to another embodiment of the invention.
Fig. 6A is a perspective view showing a magnet mounting portion relating to another embodiment of the invention.
Fig. 6B is a perspective view in which the magnet mounting portion shown in Fig. 6A is in a cross-section.
Fig. 7 is a cross-sectional view showing a noise suppressing member relating to another embodiment of the invention.

### DESCRIPTION OF EMBODIMENTS

Embodiments of the present invention are described hereinafter on the basis of the drawings. In the drawings, the arrow C direction indicates the pneumatic tire circumferential direction, the arrow R direction indicates the pneumatic tire radial direction, and arrow W indicates the pneumatic tire width direction. The pneumatic tire radial direction means the direction orthogonal to the pneumatic tire rotation axis (not illustrated). The pneumatic tire width direction means the direction parallel to the tire rotation axis. The pneumatic tire width direction can also be called the pneumatic tire axial direction. The methods of measuring the dimensions of the respective portions are methods described in the 2017 YEAR BOOK issued by JATMA (Japan Automobile Tyre Manufacturer Association, Inc.).

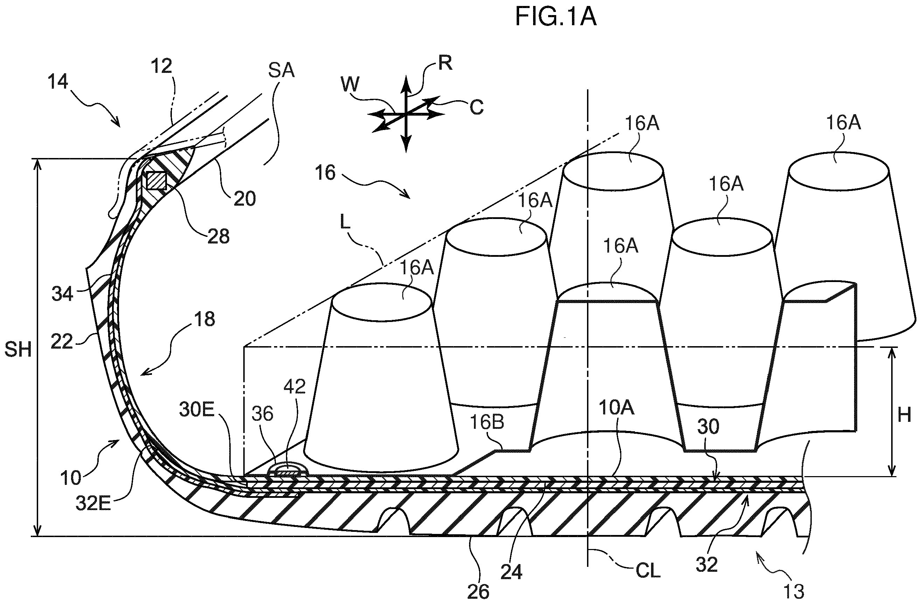

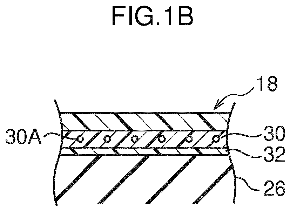

In the embodiment of the invention of Fig. 1, a tire/rim assembly 14 is structured to include a pneumatic tire 10, a rim 12 to which the pneumatic tire 10 is mounted, and a noise suppressing member 16 that is disposed at an inner portion of the pneumatic tire 10. Further, in the present embodiment of the invention, the pneumatic tire 10 at whose inner portion the noise suppressing member 16 is held is called a pneumatic tire 13 with a noise suppressing member.

The noise suppressing member 16 that is for suppressing cavity resonance is disposed at a tire inner surface 10A that is a reverse surface side of the tread of the pneumatic tire 10. Due thereto, at least a portion of annular space SA that is formed in the pneumatic tire 10 is in a state of being partitioned by the noise suppressing member 16. The noise suppressing member 16 is not a member for absorbing cavity resonance that arises temporarily, and is a member for making it such that cavity resonance itself is not generated.

### (Tire Frame Member)

A tire frame member 18 is structured from a resin material for example. Concretely, the tire frame member 18 is formed in an annular shape in the tire circumferential direction due to a pair of tire pieces (not illustrated) that are formed of resin materials being joined in the tire axial direction at a tire equatorial plane CL. Note that the tire frame member 18 may be formed by three or more tire pieces being joined together.

Further, the tire frame member 18 has a pair of bead portions 20, a pair of side portions 22 that respectively extend toward a tire radial direction outer side from the pair of bead portions 20, and a crown portion 24 that extends toward a tire width direction inner side from the side portions 22.

Note that, at the tire frame member 18 of the present embedment, portions, which are up to 30% of sectional height SH of the tire from tire radial direction inner side ends, are called the bead portions 20. A portion at which a tread 26 is disposed is called the crown portion 24.

A thermoplastic resin, a thermoplastic elastomer (TPE), a thermosetting resin, or the like that has elasticity that is equivalent to that of rubber can be used as the resin material that structures the tire frame member 18. In consideration of the elasticity at the time of traveling and the moldability at the time of manufacturing, it is preferable to use a thermoplastic elastomer. Note that the entire tire frame member 18 may be formed of the above-described resin material, or a portion thereof only may be formed of the above-described resin material.

Examples of thermoplastic elastomers are polyolefin thermoplastic elastomers (TPO), polystyrene thermoplastic elastomers (TPS), polyamide thermoplastic elastomers (TPA), polyurethane thermoplastic elastomers (TPU), polyester thermoplastic elastomers (TPC), dynamically cross-linked thermoplastic elastomers (TPV), and the like.

Examples of thermoplastic resins are polyurethane resins, polyolefin resins, vinyl chloride resins, polyamide resins and the like. Moreover, for example, resins whose deflection temperature under load prescribed by ISO 75-2 or ASTM D648 (at the time of a load of 0.45 MPa) is greater than or equal to 78°C, whose tensile yield strength prescribed by JIS K7113 is 10 MPa or more, whose tensile break elongation prescribed by that same JIS K7113 is 50% or more, and whose Vicat softening temperature (A method) prescribed by JIS K7206 is 130°C or more can be used as the thermoplastic resin.

Bead cores 28 are embedded in the bead portions of the tire frame member 18. Metal, organic fibers, structures in which organic fibers are covered by resin, or hard resins or the like can be used as the material that structures the bead cores 28. Note that the bead cores 28 may be omitted provided that the rigidity of the bead portions 20 is ensured and problems do not arise in fitting to the rim 12.

### (Belt Layer)

A belt layer 30 that serves as an example of a tire structural member is provided at an outer peripheral surface of the crown portion 24. The belt layer 30 is structured by, for example, a steel cord 30A (see Fig. 1B), which serves as a magnetic body and that is covered by a resin, being wound in a spiral form in the tire circumferential direction.

### (Belt Reinforcing Layer)

A belt reinforcing layer 32 that covers the belt layer 30 is disposed at a tire radial direction outer side of the belt layer 30. The belt reinforcing layer 32 extends from the tire equatorial plane CL side over end portions 30E of the belt layer 30 to tire width direction outer sides, and finally ends in vicinities of the borders between the side portions 22 and the crown portion 24.

The belt reinforcing layer 32 has plural reinforcing cords (not illustrated) that are covered by rubber. The reinforcing cords of the belt reinforcing layer 32 are mono-filaments (single wires) of organic fibers or multi-filaments (intertwined wires) in which organic fibers are intertwined, and extend in the tire width direction and are lined-up in the tire circumferential direction. Note that the reinforcing cords of the belt reinforcing layer 32 may be inclined at an angle of 10° or less with respect to the tire width direction.

A material such as an aliphatic polyamide, PET (polyethylene terephthalate), glass, aramid, or the like can be used as the organic fibers. Note that a metal such as steel or the like that serves as the magnetic body may be used as the material of the reinforcing cords. Further, at the belt reinforcing layer 32, the reinforcing cords may be covered by resin and not rubber.

### (Side Reinforcing Layers)

Side reinforcing layers 34 are disposed at tire outer surface sides of the tire frame member 18. The side reinforcing layers 34 extend along an outer surface of the tire frame member 18 from tire radial direction inner sides toward tire radial direction outer sides of the bead cores 28. The side reinforcing layers 34 further extend along an outer surface of the belt reinforcing layer 32 toward a tire equatorial plane CL side, and cross-over end portions 32E of the belt reinforcing layer 32 and the end portions 30E of the belt layer 30, and finally end in vicinities of the end portions 30E.

The side reinforcing layers 34 have plural reinforcing cords that are covered by rubber. The reinforcing cords of the side reinforcing layers 34 are mono-filaments (single wires) of organic fibers or multi-filaments (intertwined wires) in which organic fibers are intertwined, and extend in the radial direction (the tire radial direction) and are lined-up in the tire circumferential direction. Note that the reinforcing cords of the side reinforcing layers 34 may be inclined at an angle of 10° or less with respect to the tire radial direction.

A material such as an aliphatic polyamide, PET, glass, aramid, or the like can be used as the organic fibers. Note that a metal such as steel or the like that serves as the magnetic body may be used as the material of the reinforcing cords. Further, at the side reinforcing layers 34, the reinforcing cords may be covered by resin and not rubber.

### (Noise Suppressing Member)

The noise suppressing member 16 is a member for suppressing cavity resonance, and is formed from a sheet-like resin for example. The noise suppressing member 16 can also be called a cavity resonance noise suppressing member, a silencing member, a partitioning member or the like. The resin that structures the noise suppressing member 16 is a thermoplastic resin for example. The noise suppressing member 16 can be manufactured more easily and at a lower cost than with a case in which a sponge is used, by using a publicly known molding method such as vacuum molding, pressure molding, blow molding, press molding or the like. For example, polyvinyl chloride resin (PVC), PET resin or the like that are flexible can be used as the thermoplastic resin that structures the noise suppressing member 16, and other thermoplastic resins can also be used. Note that, other than a thermoplastic resin, the resin that structures the noise suppressing member 16 may be a thermosetting resin or the like for example.

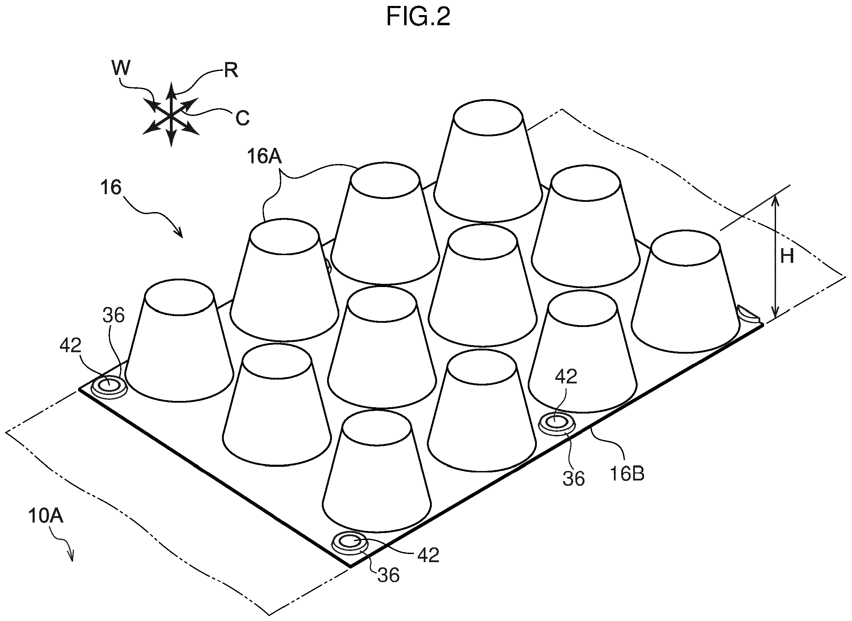

As shown in Fig. 1A and Fig. 2, the noise suppressing member 16 has a base portion 16B that is made to contact the tire inner surface 10A. As an example, at the time of molding the noise suppressing member 16, as shown in Fig. 2, the base portion 16B is made to be a planar shape, and, at the time of placing the noise suppressing member 16 at the inner portion of the pneumatic tire 10, the base portion 16B is curved. Because the base portion 16B is a sheet-shaped resin, it can be curved easily.

It is preferable to set a width of the base portion 16B to be equal to a width of the belt layer 30. This is because, if the base portion 16B is in the range at which the belt layer 30 is formed, the tire deformation is small, and therefore, the durability of the base portion 16B improves. Plural convex portions 16A that are formed in the shapes of truncated cones are formed at the base portion 16B in the form of a matrix at intervals in the tire circumferential direction and the tire width direction. Note that tire radial direction outer side surfaces of the convex portions 16A are concave. Note that the convex portions 16A can also be called projecting portions, jutting portions, or the like.

As shown in Fig. 1A and Fig. 2, maximum height dimension H (see Fig. 1A and Fig. 2) of the convex portions 16A of the noise suppressing member 16 that is measured along the tire radial direction is preferably greater than or equal to 50% of the tire sectional height SH. The maximum height dimension H is the height in the state in which the noise suppressing member 16 is made to contact the tire inner surface. This is because, if the maximum height dimension H is less than 0.5 SH, the effect of suppressing cavity resonance is lessened.

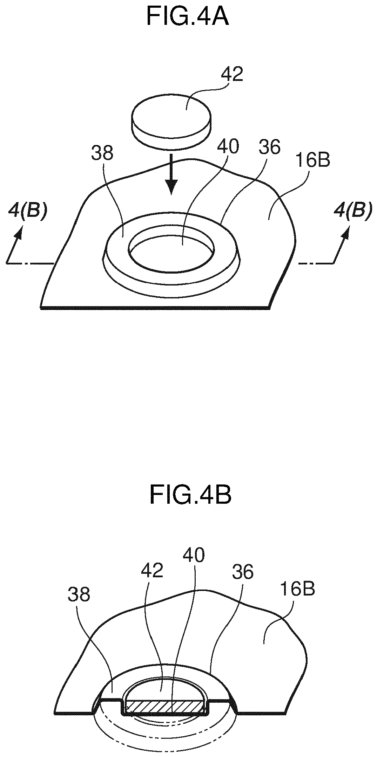

As shown in Fig. 1A and Fig. 4A, plural magnet mounting portions 36 are formed in vicinities of the both ends in the width direction of the base portion 16B, at intervals along the tire circumferential direction. The magnet mounting portions 36 have convex portions 38, which are annular and project-out toward the tire radial direction inner side, i.e., the side opposite the tire inner surface. Disc-shaped magnets 42 are fit into concave portions 40, which are at the inner sides of the convex portions 38, and are fixed by an adhesive or the like. Rare-earth magnets whose magnetic forces are large, such as neodymium magnets, samarium cobalt magnets and the like are preferably used as the magnets 42, and generic products that are generally on the market can be used therefor.

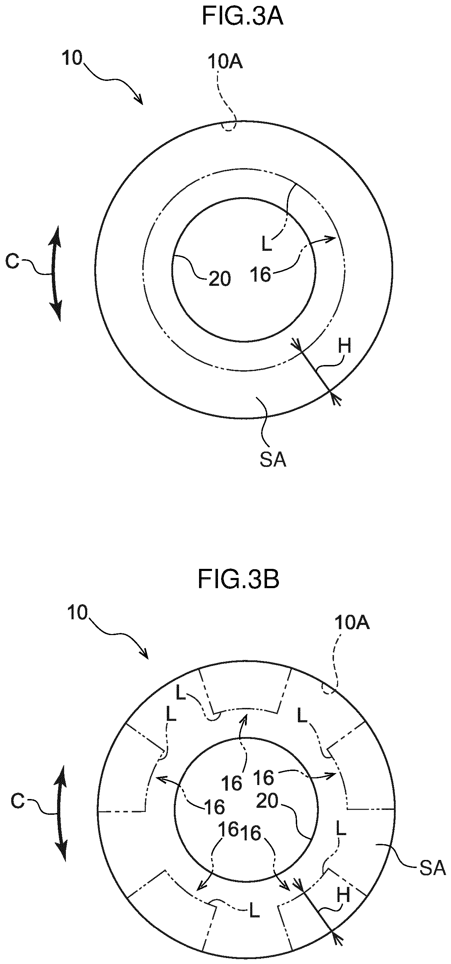

As shown in Fig. 3A, the noise suppressing member 16 may be disposed over the entire tire circumferential direction, or, as shown in Fig. 3B, the noise suppressing member 16 may be disposed discretely in the tire circumferential direction. In the case of discrete placement, it is desirable for a prime number of the noise suppressing members 16 to be disposed non-uniformly in the tire circumferential direction in consideration of the uniformity of the pneumatic tire 10 and the like.

### (Operation)

The present embodiment of the invention is structured as described above, and operation thereof is described hereinafter. In Fig. 1A, at the pneumatic tire 10 relating to the present embodiment of the invention, the noise suppressing member 16 that has the convex portions 16A is held at the tire inner surface 10A by the attractive forces (in other words, the magnetic forces) of the magnets 42. Namely, because the belt layer 30 of the pneumatic tire 10 is structured by the resin-covered steel cord being wound in a spiral form in the tire circumferential direction, when the noise suppressing member 16 is placed at the tire inner surface 10A that is at the reverse surface side of the tread, attractive forces arise between the steel cord 30A and the magnets 42 that are attached to the base portion 16B, and the noise suppressing member 16 is pushed against and held at the tire inner surface 10A. Note that, at the time when the pneumatic tire 10 is rotating, centrifugal force acts on the noise suppressing member 16, and the noise suppressing member 16 is pushed against the tire inner peripheral surface.

Because the noise suppressing member 16 is not retained at the tire inner surface 10A by using an adhesive or the like, it is easy for the noise suppressing member 16 to be held at the tire inner surface 10A, and removal thereof is also easy.

Further, the noise suppressing member 16 can easily be held if the tire is a pneumatic tire in which a magnetic body such as a steel cord or the like is contained as a tire structural member within the tread, and there is no need to separately ready a special magnetic body for holding the noise suppressing member 16 at the tire and to mount the noise suppressing member 16 to the tire. Accordingly, the noise suppressing member 16 can be easily retained even at existing, general pneumatic tires in which a magnetic body such as a steel cord or the like is contained as a tire structural member. Accordingly, it is easy to make the pneumatic tire 10 hold the noise suppressing member 16 not only at the tire manufacturer, but also at a tire store or the like. Further, the noise suppressing member 16 can be retained not only at the pneumatic tire 10 that is a new product, but also at the pneumatic tire 10 that is in use by being attached thereto later.

In the tire/rim assembly 14, the annular space SA is formed between the pneumatic tire 10 and the rim 12. At least a portion of the space SA is in a state of being partitioned in the tire circumferential direction by the convex portions 16A of the noise suppressing member 16. Due thereto, the generation of cavity resonance within the pneumatic tire 10 can be impeded. In other words, it can be made such that an acoustic space that generates cavity resonance is not formed within the pneumatic tire 10.

Because the noise suppressing member 16 is structured from a sheet-shaped member of resin, the materials cost can be made to be lower than in a case in which a sponge is used. Moreover, molding and mounting are easy, and a lowering of costs is possible. Accordingly, in accordance with the pneumatic tire 10 relating to the present embodiment, cavity resonance can be suppressed at a lower cost than in a case in which a sponge is used.

Further, generic products that are on the market can be used for the magnets 42 that are for retaining the noise suppressing member 16, and the noise suppressing member 16 can be provided at a low cost.

Moreover, in the present embodiment, because the maximum height dimension H of the noise suppressing member 16 is set to greater than or equal to 50% of the tire sectional height SH, a good cavity resonance suppressing effect is obtained.

### [Other Embodiments]

An example of an embodiment of the present invention has been described above. However, embodiments of the present invention are not limited to the above, and the present invention can of course be implemented by being modified in various ways other than the above without departing from the scope of the present invention as claimed.

Although the tire frame member of the pneumatic tire 10 is structured by a resin material, the pneumatic tire 10 may be a rubber tire that uses carcass plies (not illustrated). In this case, the inner liner of the tire inner surface 10A is preferably made to be a thin film inner liner that is made of a publicly known synthetic resin. A film inner liner that is made of a synthetic resin can be formed to be thinner than an inner liner that is made of rubber. Due thereto, the steel cord 30A and the magnets 42 can be set close to one another, and the attractive force can be ensured.

The structure of the noise suppressing member 16 is not limited to the above-described structure. The shape of the convex portions 16A is not limited to a truncated cone shape, and may be another shape provided that cavity resonance can be suppressed, and the respective heights thereof may be different.

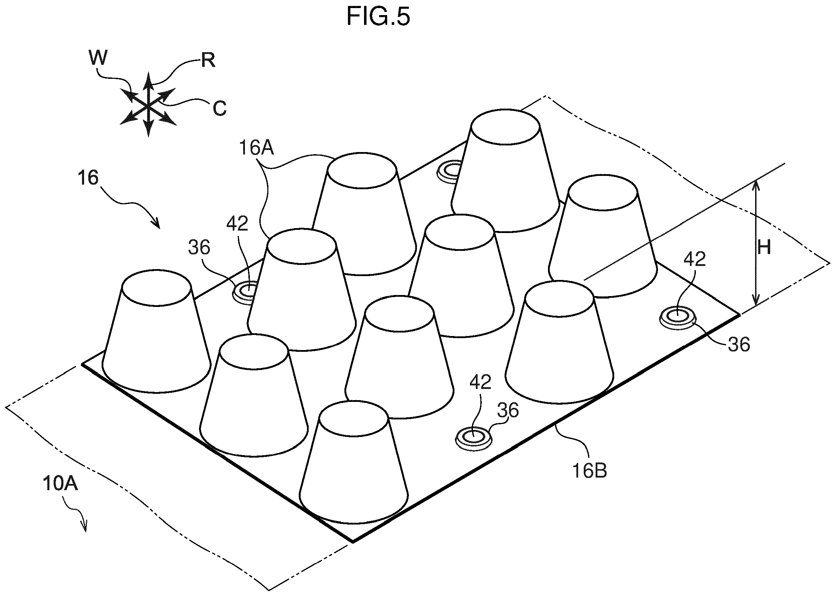

The arrangement of the convex portions 16A is not limited to that of the above-described embodiment. As shown in Fig. 5, the plural convex portions 16A may be disposed in a staggered form. Or, although not illustrated, the plural convex portions 16A may be disposed randomly.

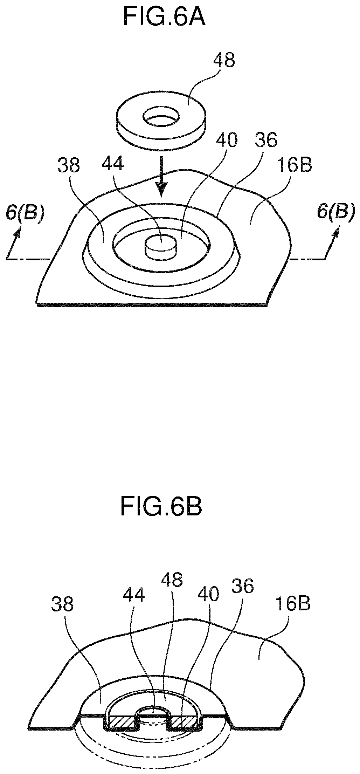

In the above-described embodiment, the magnet mounting portions 36 have the convex portions 38 that are annular, and the magnets 42 that are disc-shaped are fit with and adhered to the concave portions 40 that are at the inner sides of the convex portions 38. However, as shown in Fig. 6, convex portions 44 that are round may be formed at the centers of the concave portions 40 that are at the inner sides of the annular convex portions 38, and magnets 46 that are donut-shaped may be fit and adhered between the annular convex portions 38 and the circular convex portions 44. Further, although not illustrated, the shapes of the magnet mounting portions 36, the magnets 42 and the magnets 46 may be rectangular or the like.

At the convex portions 16A of the above-described embodiment of the invention, holes that pass in-and-out through the convex portions 16A are not formed, but holes that pass in-and-out through the convex portions 16A may be formed.

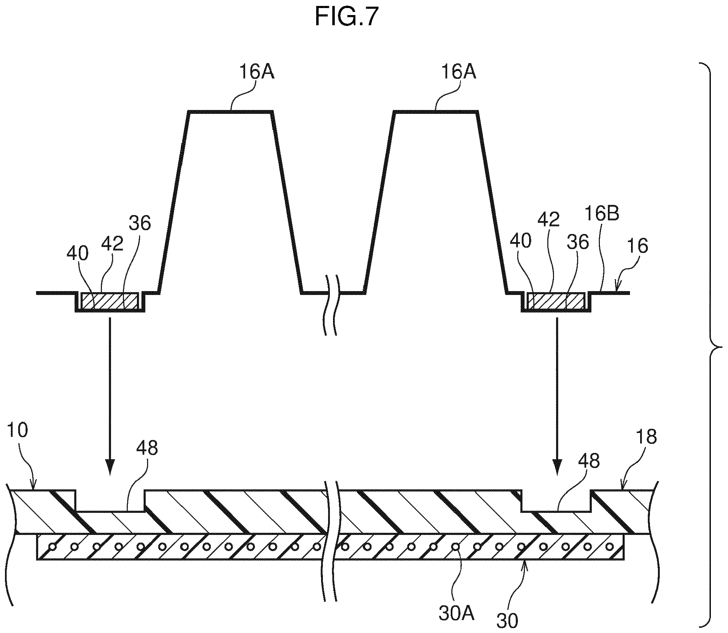

At the noise suppressing member 16 relating to another embodiment of the invention that is shown in Fig. 7, the magnets 42 that are disc-shaped are fit into the concave portions 40 that are formed in the base portion 16B, and are fixed by an adhesive or the like. Convex portions that are at sides opposite the concave portions 40 are fit-into concave portions 48 that are formed in the inner peripheral surface of the tire frame member 18. Due thereto, the magnets 42 are close to the steel cord 30A, and the attractive force can be increased. Further, because the convex portions that are at the sides opposite the concave portions 40 are fit into the concave portions 48 of the tire frame member 18, shifting of the noise suppressing member 16 also can be suppressed. Instead of the concave portions 48, portions of the tire frame member 18 may be formed to be thin.

In the pneumatic tire 10 of the above-described embodiment, the magnetic body is the steel cord that structures the belt layer 30.

## Claims

1. A noise suppressing member (16), comprising:
a noise suppressing member main body formed from a sheet-shaped member, that is configured to be disposed at an inner portion of a pneumatic tire (10), and that has convex portions (16A), which are convex from an inner surface side of the pneumatic tire (10) toward an inner side in a tire radial direction, configured to suppress cavity resonance of the pneumatic tire (10); and
magnets (42) provided at the noise suppressing member main body, the magnets (42) configured to generate attractive force with respect to a belt layer (30) provided at an outer peripheral surface of a crown portion (24) of the pneumatic tire (10), and the belt layer (30) is structured by a steel cord (30A), which is covered by a resin and which is wound in a spiral form in a tire circumferential direction, wherein:
a plurality of magnet mounting portions (36) are formed at both ends in a tire width direction of the noise suppressing member main body, at intervals along a tire circumferential direction,
the magnet mounting portions (36) have convex portions (38), which are annular-shaped and project-out toward a tire radial direction inner side, and
the magnets (42) are fit into concave portions (40) within the convex portions (38).

2. A pneumatic tire (10) with a noise suppressing member (16), the pneumatic tire (10) comprising:
a belt layer (30) that is provided at an outer peripheral surface of a crown portion (24) of the pneumatic tire (10), and that is structured by a steel cord (30A), which is covered by a resin and which is wound in a spiral form in a tire circumferential direction;
and
the noise suppressing member according to claim 1.

3. A tire/rim assembly (14), comprising:
a rim (12); and
the pneumatic tire with a noise suppressing member (13) of Claim 2, which tire is mounted on the rim (12).

## Patentansprüche

1. Geräusch unterdrückendes Element (16), das Folgendes umfasst:
einen aus einem bahnförmigen Element geformten Geräuschunterdrückungselement-Hauptkörper, der dafür konfiguriert ist, an einem inneren Abschnitt eines Luftreifens (10) angeordnet zu werden, und der konvexe Abschnitte (16A) aufweist, die von einer Innenflächenseite des Luftreifens (10) aus hin zu einer in einer Reifenradialrichtung inneren Seite konvex sind, dafür konfiguriert, eine Hohlraumresonanz des Luftreifens (10) zu unterdrücken; und
Magnete (42), die an dem Geräuschunterdrückungselement-Hauptkörper bereitgestellt werden, wobei die Magnete (42) dafür konfiguriert sind, eine Anziehungskraft in Bezug auf eine Gürtellage (30) zu erzeugen, die an einer äußeren Umfangsfläche eines Scheitelabschnitts (24) des Luftreifens (10) bereitgestellt wird, und die Gürtellage (30) durch einen Stahlkord (30A) strukturiert ist, der von einem Harz überzogen ist und der in einer Spiralform in einer Reifenumfangsrichtung gewickelt ist, wobei:
eine Vielzahl von Magnetanbringungsabschnitten (36) an beiden Enden in einer Reifenbreitenrichtung des Geräuschunterdrückungselement-Hauptkörpers, in Abständen entlang einer Reifenumfangsrichtung, geformt ist,
die Magnetanbringungsabschnitte (36) konvexe Abschnitte (38) aufweisen, die ringförmig sind und hin zu einer in Reifenradialrichtung inneren Seite heraus vorspringen, und
die Magnete (42) in konkave Abschnitte (40) innerhalb der konvexen Abschnitte (38) eingepasst sind.

2. Luftreifen (10) mit einem Geräusch unterdrückenden Element (16), wobei der Luftreifen (10) Folgendes umfasst:
eine Gürtellage (30), die an einer äußeren Umfangsfläche eines Scheitelabschnitts (24) des Luftreifens (10) bereitgestellt wird, und die durch einen Stahlkord (30A) strukturiert ist, der von einem Harz überzogen ist und der in einer Spiralform in einer Reifenumfangsrichtung gewickelt ist,
und
das Geräusch unterdrückende Element nach Anspruch 1.

3. Reifen-Felge-Baugruppe (14), die Folgendes umfasst:
eine Felge (12); und
den Luftreifen mit einem Geräusch unterdrückenden Element (13) nach Anspruch 2, wobei der Luftreifen auf der Felge (12) montiert ist.

## Revendications

1. Elément de suppression du bruit (16), comprenant :
un corps principal de l'élément de suppression du bruit formé à partir d'un élément en forme de feuille, qui est configuré pour être disposé au niveau d'une partie interne d'un pneumatique (10), et qui comporte des parties convexes (16A), qui sont convexes d'un côté de la surface interne du pneumatique (10) vers un côté interne, dans une direction radiale du pneumatique, configuré pour supprimer une résonance de cavité du pneumatique (10) ; et
des aimants (42) fournis au niveau du corps principal de l'élément de suppression de bruit, les aimants (42) étant configurés pour générer une force d'attraction par rapport à une couche de ceinture (30) fournie au niveau d'une surface périphérique extérieure d'une partie de sommet (24) du pneumatique (10), et la couche de ceinture (30) est structurée par un câble d'acier (30A), qui est revêtu d'une résine et qui est enroulé en une forme en spirale dans une direction circonférentielle du pneumatique, dans lequel ;
une pluralité de parties de montage des aimants (36) sont formées au niveau des deux extrémités, dans une direction de la largeur du pneumatique, du corps principal de l'élément de suppression du bruit, à des intervalles le long d'une direction circonférentielle du pneumatique,
les parties de montage des aimants (36) comportent des parties convexes (38) qui ont une forme annulaire et débordent vers un côté interne, dans la direction radiale du pneumatique, et
les aimants (42) sont ajustés dans des parties concaves (40) à l'intérieur des parties convexes (38).

2. Pneumatique (10) avec un élément de suppression du bruit (16), le pneumatique (10) comprenant :
une couche de ceinture (30) qui est fournie au niveau d'une surface périphérique extérieure d'une partie de sommet (24) du pneumatique (10), et qui est structurée par un câble d'acier (30A), qui est revêtu d'une résine et qui est enroulé en forme de spirale dans une direction circonférentielle du pneumatique ;
et
l'élément de suppression du bruit selon la revendication 1.

3. Ensemble pneumatique/jante (14) comprenant :
une jante (12) ; et
le pneumatique avec un élément de suppression du bruit (13) selon la revendication 2, ledit pneumatique étant monté sur la jante (12).
